# EUROPEAN PATENT APPLICATION

(11) **EP 4 755 825 A1**
(43) Date of publication of application: **10.06.2026**
(21) Application number: 24851090.1
(22) Date of filing: 08.08.2024
(51) Int. Cl.: B65G 35/00

(54) **AUTOMATED GUIDED VEHICLE AND DIFFERENTIAL DRIVE DEVICE FOR AUTOMATED GUIDED VEHICLE**

(30) Priority: 08.08.2023 CN 202310995147; 08.08.2023 CN 202322124728 U
(71) Applicant: Hangzhou Hikrobot Co., Ltd., Hangzhou, Zhejiang 310051 (CN)
(72) Inventor: CHEN, Wen, Hangzhou, Zhejiang 310051 (CN); DU, Tianhao, Hangzhou, Zhejiang 310051 (CN)
(74) Representative: Michalski Hüttermann & Partner mbB
(86) International application number: PCT/CN2024/110637
(87) International publication number: WO 2025/031445

(57) **Abstract**

Disclosed are an automated guided vehicle and a differential drive device for the automated guided vehicle. The differential drive device includes: a drive motor assembly (10) including a housing (11), a pair of output shafts (12), and a pair of drive motors, the pair of output shafts (12) respectively extend from a pair of opposite side walls of the housing (11), the pair of output shafts (12) are both arranged along a first axis (L), the pair of drive motors are in one-to-one correspondence with the pair of output shafts (12), and are configured to drive the pair of output shafts (12) to rotate independently of each other, enabling the pair of output shafts (12) to rotate at the same speed or at different speeds, and/or in the same direction or in opposite directions; a pair of wheels (20), respectively coaxially connected to the pair of output shafts (12), the pair of output shafts (12) respectively drive the pair of wheels (20) to rotate; and a support assembly (30), supportably connected to a bottom surface of a vehicle body of the automated guided vehicle, and rotatably mounted on a top surface of the housing (11) around a horizontal direction, the support assembly (30) isolates the bottom surface of the vehicle body of the automated guided vehicle from a support surface for supporting the wheels, enabling the bottom surface of the vehicle body of the automated guided vehicle to remain horizontal when the wheels contact the support surface. The differential drive device adopts a dual output shaft structure, has a simple and compact structure, and plays a significant role in reducing an overall turning radius of the automated guided vehicle and optimizing a layout of a chassis of the automated guided vehicle.

## Description

### TECHNICAL FIELD

The present application relates to the field of automated guided vehicles, and in particular, to an automated guided vehicle and a differential drive device for the automated guided vehicle.

### BACKGROUND

An automated guided vehicle (AGV) is an industrial vehicle that loads cargo automatically or manually, travels automatically or tows a cargo trolley to a designated location along a predefined route, and then unloads the cargo automatically or manually. As an important carrier for intelligent logistics, AGVs have attracted extensive attention from various industries in society. At present, the AGV drive mainly includes a steering wheel drive and a two-wheel differential drive. Two-wheel differential drive is generally applied to small and light-duty AGVs.

### SUMMARY

The present application provides an automated guided vehicle and a differential drive device for the automated guided vehicle. The drive motor assembly is formed into an integral shape and adopts a dual output shaft structure, which has a simple and compact structure, and plays a significant role in reducing an overall turning radius of the automated guided vehicle and optimizing a layout of a chassis of the automated guided vehicle.

An embodiment of the present application provides a differential drive device for an automated guided vehicle, including: a drive motor assembly, where the drive motor assembly includes a housing, a pair of output shafts and a pair of drive motors, the pair of output shafts extend from a pair of opposite side walls of the housing respectively, and the pair of output shafts are both arranged along a first axis; the pair of drive motors are in one-to-one correspondence with the pair of output shafts, and are configured to drive the pair of output shafts to rotate independently of each other, enabling the pair of output shafts to rotate at a same speed or different speeds, and/or in a same direction or opposite directions; a pair of wheels coaxially connected to the pair of output shafts respectively, the pair of output shafts respectively drive the pair of wheels to rotate; and a support assembly supportably connected to a bottom surface of a vehicle body of the automated guided vehicle, and rotatably mounted on a top surface of the housing around a horizontal direction perpendicular to the first axis direction, where the support assembly isolates the bottom surface of the vehicle body of the automated guided vehicle from a support surface for supporting the wheels, enabling the bottom surface of the vehicle body of the automated guided vehicle to remain horizontal when the wheels contact the support surface.

In an embodiment, the output shaft is connected to the wheel through a speed reducer, and a gear directly engaged with the speed reducer is provided on an end of the output shaft; the housing includes a pair of flanges, the pair of flanges are respectively mounted on the pair of opposite side walls of the housing, each of the flanges includes a step surface protruding outward, the output shaft extends from a center of a corresponding step surface, and an inner side surface of the speed reducer is flush with the corresponding step surface.

In an embodiment, each of the wheels is disposed around a circumferential surface of a corresponding speed reducer, and an inner side surface of each of the wheels is flush with the corresponding step surface.

In an embodiment, a minimum turning radius of the differential drive device is a distance between the pair of wheels in a direction of the first axis.

In an embodiment, the support assembly includes: an outer ring and an inner ring, where the outer ring and the inner ring are concentrically arranged in a same plane, and an outer edge of the inner ring is in rolling fit with an inner edge of the outer ring, enabling the inner ring to rotate relative to the outer ring around a second axis extending in a longitudinal direction; and a pair of connecting brackets disposed on a bottom surface of the inner ring and symmetrically arranged with respect to a center of the inner ring, where the outer ring is supportably connected to the bottom surface of the vehicle body of the automated guided vehicle, and the connecting brackets are mounted on the top surface of the housing.

In an embodiment, a pair of support brackets are provided on the top surface of the housing, the pair of support brackets are symmetrically arranged about the first axis, and the pair of connecting brackets are respectively hinged to the pair of support brackets through a pair of hinge shafts.

In an embodiment, the pair of output shafts rotate in a same direction at a same speed, enabling the differential drive device to move linearly; the pair of output shafts rotate at different speeds, enabling the differential drive device to move curvilinearly; or the pair of output shafts rotate in opposite directions at a same speed, enabling the differential drive device to rotate in place.

Another embodiment of the present application further provides an automated guided vehicle, including: a vehicle body; and the differential drive device as described above, supportably connected to a bottom surface of the vehicle body to drive the vehicle body to move linearly, move curvilinearly, or rotate in place.

In an embodiment, there is one differential drive device, the one differential drive device is mounted on a front side of the bottom surface of the vehicle body along a central axis of the bottom surface of the vehicle body. The automated guided vehicle further includes a pair of driven wheels, and the pair of driven wheels are symmetrically mounted on a rear side of the bottom surface of the vehicle body about the central axis.

In an embodiment, there is a pair of differential drive devices, the pair of the differential drive devices are mounted on the bottom surface of the vehicle body along a diagonal line of the bottom surface of the vehicle body. The automated guided vehicle further includes a pair of driven wheels, and the pair of driven wheels are mounted on the bottom surface of the vehicle body along the other diagonal line of the bottom surface of the vehicle body.

In an embodiment, there are four differential drive devices, and the four differential drive devices are mounted at four corners of the bottom surface of the vehicle body.

It can be seen from the foregoing technical solutions that, in the embodiments of the present application, the drive motor assembly is formed into an integral shape and adopts a dual output shaft structure, where the pair of output shafts are disposed in the same axial direction and extend from a pair of opposite side walls of the housing respectively, to drive the pair of wheels to rotate respectively. The pair of output shafts rotate independently of each other, and are each corresponding to one drive motor, so that the pair of output shafts can realize not only differential rotation, but also reverse rotation, thereby enabling the omnidirectional movement of the entire differential drive device.

Specifically, the pair of output shafts may rotate in the same direction at the same speed, rotate in the same direction at different speeds, rotate in opposite directions at the same speed, or rotate in opposite directions at different speeds. Because the pair of output shafts are respectively driven by the pair of drive motors, rotation directions and rotation speeds of the pair of output shafts are independent of each other without mutual interference, thereby implementing a possibility of differential combination.

Further, in the embodiments of the present application, the pair of drive motors are integrated into the housing, rendering a simple and compact structure, which has a significant effect on reducing the overall turning radius of the automated guided vehicle and optimizing the layout of the chassis of the automated guided vehicle.

In the embodiments of the present application, the support assembly is supportably connected to the bottom surface of the vehicle body of the automated guided vehicle, and is rotatably mounted on the top surface of the housing about a horizontal direction, so that the support assembly is rotatable relative to the bottom surface of the vehicle body of the automated guided vehicle about the horizontal direction, the bottom surface of the vehicle body of the automated guided vehicle is isolated from the support surface (usually the ground) of the wheel by the support assembly, the bottom surface of the vehicle body of the automated guided vehicle may not be absolutely parallel to the support surface of the wheel, but the bottom surface of the vehicle body of the automated guided vehicle may form an acute angle with the support surface of the wheel of one of the differential drive devices. The bottom surface of the vehicle body of the automated guided vehicle is always kept horizontal by the rotation of the support assembly of one of the differential drive devices relative to the bottom surface of the vehicle body of the automated guided vehicle. This rotation adjustment is automatically realized based on the rigidity of the bottom surface of the vehicle body of the automated guided vehicle, which is simpler than the traditional seesaw structure, greatly saves space, enhances the adaptability of the entire differential drive device, and can balance the forces on the two wheels even on the bumpy road.

### BRIEF DESCRIPTION OF DRAWINGS

The following accompanying drawings merely serve to illustrate and explain the present application, and are not intended to limit the scope of the present application.
FIG. 1 is a schematic structural diagram of a differential drive device for an automated guided vehicle according to the present application.
FIG. 2 is a schematic structural diagram of a drive motor assembly according to a differential drive device according to the present application.
FIG. 3 is a partial exploded view of the differential drive device according to the present application.
FIG. 4 is a schematic structural diagram of a support assembly of a differential drive device according to the present application.
FIG. 5A to FIG. 5C are schematic structural diagrams of an automated guided vehicle according to the present application.

### DETAILED DESCRIPTION

In order to make the technical features, objectives and effects of the present application clearer and more understandable, specific embodiments of the present application are described with reference to the accompanying drawings, and the same reference numerals in the accompanying drawings represent the same parts.

In this specification, the term "schematic" means "serving as an example, instance, or illustration", and any illustration or implementation described herein as "schematic" should not be construed as a more preferred or advantageous technical solution.

In order to make the drawings concise, the drawings only schematically show the parts related to the present application, which do not represent the actual structure of the product. In addition, in order to make the drawings concise and easy to understand, in some drawings, only one of the components having the same structure or function is schematically illustrated, or only one of them is marked.

In this specification, the term such as "upper", "lower", "front", "rear", "left", "right", and the like is merely used to indicate relative positional relationships between related parts, but does not limit absolute positions of the related parts.

In this specification, the term such as "first", "second", and the like is merely used to distinguish one from another, but does not indicate any degree of importance and order of precedence, mutual dependency, and the like.

In this specification, the term such as "equal", "same", and the like is not strictly mathematical and/or geometric limitations, but includes allowable errors that can be understood by a person skilled in the art and allowed in manufacturing or use. Unless otherwise specified, the numerical range herein includes not only the entire range between its two endpoints, but also several sub-ranges contained therein.

Exemplary embodiments will now be described more fully with reference to the accompanying drawings.

The present application provides an automated guided vehicle and a differential drive device for the automated guided vehicle. The drive motor assembly is formed into an integral shape and adopts a dual output shaft structure, which has a simple and compact structure, and plays a significant role in reducing an overall turning radius of the automated guided vehicle and optimizing a layout of a chassis of the automated guided vehicle.

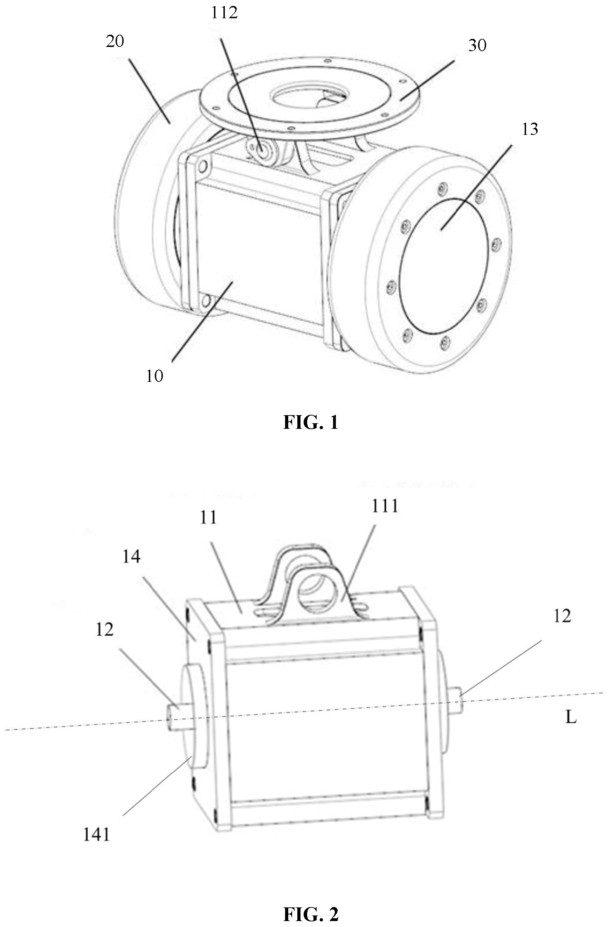

As shown in FIG. 1 to FIG. 3, an embodiment of the present application provides a differential drive device for an automated guided vehicle, including: a drive motor assembly 10, a pair of wheels 20, and a support assembly 30. The drive motor assembly 10 includes a housing 11, a pair of output shafts 12 and a pair of drive motors. The housing 11 may be formed into a cuboid shape, and the pair of output shafts 12 extend from a pair of opposite side walls of the housing 11 respectively. The pair of output shafts 12 are both arranged along a direction of a first axis L, and the first axis L may extend along a horizontal direction. The pair of drive motors are in one-to-one correspondence with the pair of output shafts 12, and are configured to drive the pair of output shafts 12 to rotate independently of each other, so that the pair of output shafts 12 rotate at the same speed or different speeds, and/or in the same direction or in opposite directions. The pair of wheels 20 are coaxially connected to the pair of output shafts 12 respectively, and the pair of output shafts 12 drive the pair of wheels 20 to rotate respectively. The support assembly 30 is supportably connected to a bottom surface of a vehicle body of the automated guided vehicle and rotatably mounted on a top surface of the housing 11 around a horizontal direction H perpendicular to the first axis L. The support assembly 30 isolates the bottom surface of the vehicle body of the automated guided vehicle from a support surface for supporting the wheel 20, so that when the wheel 20 contacts the support surface, the bottom surface of the vehicle body of the automated guided vehicle remains horizontal.

In this embodiment, the drive motor assembly 10 is formed into an integral shape and configured with the dual output shaft structure, and the pair of output shafts 12 are arranged along the same axial direction and extend from the pair of opposite side walls of the housing 11 respectively to drive the pair of wheels 20 to rotate respectively. The pair of output shafts 12 rotate independently of each other, and are each corresponding to one drive motor, so that the pair of output shafts 12 can not only realize differential rotation, but also realize reverse rotation, thereby enabling omnidirectional movement of the entire differential drive device.

In an embodiment, the pair of output shafts 12 are disposed along the horizontal direction, and the pair of opposite side walls of the housing 11 are disposed along a longitudinal direction. Based on usage habits, a direction of one of the central axes of the housing 11 is generally defined as a traveling direction, and the pair of side walls extend along the traveling direction. The first axis L is perpendicular to the traveling direction, so that the rotation of the wheel around the first axis L can drive the entire differential drive device to move along the traveling direction.

Specifically, the pair of output shafts 12 may rotate in the same direction at the same speed, rotate in the same direction at different speeds, rotate in opposite directions at the same speed, or rotate in opposite directions at different speeds. Because the pair of output shafts 12 are respectively driven by the pair of drive motors, rotation directions and rotation speeds of the pair of output shafts 12 are independent of each other without mutual interference, thereby implementing a possibility of differential combination.

Herein, the same-direction rotation of the output shafts 12 means that the contributions to the traveling direction are the same, for example, the pair of output shafts 12 both rotate forward to drive the entire drive motor assembly 10 to travel forward. When viewed toward the side walls where the pair of output shafts 12 are respectively located, one of the output shafts 12 rotates clockwise, and the other output shaft 12 rotates counterclockwise, so as to achieve the effect of forward movement. The reverse rotation means that contributions to the traveling direction are opposite. When viewed toward the side walls where the pair of output shafts 12 are respectively located, the pair of output shafts 12 both rotate clockwise or counterclockwise.

Further, in this embodiment, the pair of drive motors are integrated in the housing 11, forming a simple and compact structure, which has a significant effect on reducing the overall turning radius of the automated guided vehicle and optimizing the layout of the chassis of the automated guided vehicle.

The chassis of the AGV usually requires at least three support wheels to achieve a stable support, among which some support wheels may include one or more differential drive devices, and the remaining support wheels may be supplemented by driven wheels. When the AGV travels on uneven ground, the one or more support wheels may lose contact with the ground due to the rigidity requirements of the chassis of the AGV, thereby failing to provide sufficient support force or a stable support plane for the AGV.

In this embodiment, the support assembly 30 is supportably connected to the bottom surface of the vehicle body of the automated guided vehicle, and is rotatably mounted on the top surface of the housing 11 about the horizontal direction, so that the support assembly 30 is rotatable relative to the bottom surface of the vehicle body of the automated guided vehicle about the horizontal direction, the bottom surface of the vehicle body of the automated guided vehicle is isolated from the support surface (usually the ground) of the wheel 20 by the support assembly 30, the bottom surface of the vehicle body of the automated guided vehicle may not be absolutely parallel to the support surface of the wheel 20, but the bottom surface of the vehicle body of the automated guided vehicle may form an acute angle with the support surface of the wheel 20 of one of the differential drive devices. The bottom surface of the vehicle body of the automated guided vehicle is always kept horizontal by the rotation of the support assembly 30 of one of the differential drive devices relative to the bottom surface of the vehicle body of the automated guided vehicle. This rotation adjustment is automatically realized based on the rigidity of the bottom surface of the vehicle body of the automated guided vehicle, which is simpler than the traditional seesaw structure, greatly saves space, enhances the adaptability of the entire differential drive device, and can balance the forces on the two wheels even on the bumpy road.

In this embodiment, the output shaft 12 is connected to the wheel 20 via a speed reducer 13, and an end of the output shaft 12 has a gear directly engaged with the speed reducer 13. The housing 11 includes a pair of flanges 14. The pair of flanges 14 are respectively mounted on the pair of opposite side walls of the housing 11. Each of the flanges 14 has a step surface 141 protruding outward, the output shaft 12 extends from a center of the step surface 141, and an inner side surface of the speed reducer 13 is flush with the step surface 141.

In an example, the end of the output shaft 12 is directly formed as a sun gear, and is engaged with planet gears of the speed reducer 13 for power transmission, thereby eliminating the need for connectors such as couplings and flat-key bushings, saving design space, and improving transmission efficiency.

The step surface 141 is configured to isolate the speed reducer 13 from the flange 14 of the housing 11. When the step surface 141 is sufficiently small, the overall size of the differential drive device may be small enough.

The integrated drive motor assembly of this embodiment adopts an integrated design of four components: the two drive motors with dual output shafts, the flanges, the common housing, and a hinge support bracket to be described below, which can eliminate the connection and assembly between the components. The housing is designed with a hinged support bracket mounted with a rotary support component, which can eliminate the need for an adapter, and help to make the overall size of the drive motor assembly more compact.

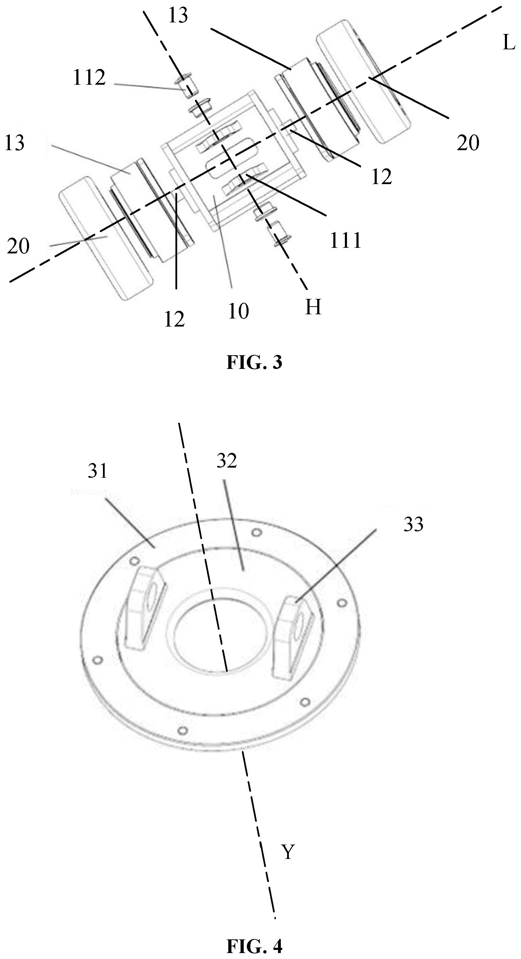

As shown in FIG. 3, in an embodiment, the wheel 20 is formed in a hollow shape and is disposed around a circumferential surface of the speed reducer 13, and an inner side surface of the wheel 20 is flush with the step surface 141.

A wheel core of the wheel is designed to be hollow, and the speed reducer is wrapped inside the wheel core, which will not affect the length dimension of the differential drive device. Moreover, the wheel and the speed reducer are fixedly connected with each other by screws. If the wheel has abnormal problems such as wear, the wheel can be disassembled and replaced separately without replacing the entire speed reducer.

As the isolation between the inner side surface of the wheel 20 and the flange 14 of the housing 11, the step surface 141 can make a gap between the wheel 20 and the housing 11 small enough to reduce the overall size and turning radius of the differential drive device. The minimum turning radius of the differential drive device refers to a distance between the pair of wheels 20 in the direction of the first axis L. The coaxial layout of the speed reducer and the drive motor greatly reduces the turning radius of the entire differential drive device, has a compact structure, can meet the layout requirements of different vehicle models, and is particularly suitable for AGV with a narrow vehicle width.

As shown in FIG. 4, the support assembly 30 includes: an outer ring 31 and an inner ring 32, and a pair of connecting brackets 33. The outer ring 31 and the inner ring 32 are concentrically arranged in the same plane. An outer edge of the inner ring 32 is in rolling fit with an inner edge of the outer ring 31, so that the inner ring 32 is rotatable relative to the outer ring 31 around a second axis Y extending in a longitudinal direction. The pair of connecting brackets 33 are arranged on a bottom surface of the inner ring 32 and symmetrically arranged about a center of the inner ring 32. The outer ring 31 is supportably connected to a bottom surface of the vehicle body of the automated guided vehicle, and the connecting brackets 33 are mounted on the top surface of the housing 11.

As shown in FIG. 2 and FIG. 3, the top surface of the housing 11 is provided with a pair of support brackets 111. The pair of support brackets 111 are symmetrically arranged about the first axis L, and the connecting brackets 33 are hinged with the support brackets 111 through hinge shafts 112.

The drive motor assembly 10 is fixed on the inner ring 32 of the support assembly 30, the outer ring 31 of the support assembly 30 is fixed on the AGV frame/body, and balls are provided between the inner ring 32 and the outer ring 31, enabling relative rotation between the inner ring 32 and the outer ring 31 in the horizontal direction. When the motors drive the wheels to rotate in the same direction, the vehicle is driven to move forward; when the motors drive the wheels to rotate in the opposite directions, the drive motor assembly drives the inner ring of the support assembly to rotate relative to the outer ring, thereby realizing omnidirectional movement such as turning and in-place rotation. This structure is simple and compact.

The drive motor assembly 10 is connected to the connecting bracket 33 of the support assembly 30 through the hinge shaft 112. This structure allows the drive motor assembly 10 to rotate around the axis of the hinge shaft 112, enabling the two wheels 20 to float to ensure that the two wheels 20 can still touch the ground simultaneously on bumpy roads with uneven ground and foreign matters, thereby balancing the driving forces of the two power devices to form a resultant force and exert the maximum efficiency of the entire differential drive device.

With the structure of this embodiment, when the pair of output shafts 12 rotate in the same direction at the same speed, the differential drive device moves linearly; when the pair of output shafts 12 rotate at different speeds (in the same direction or the opposite direction), the differential drive device moves along a curve; and when the pair of output shafts 12 rotate in the opposite directions at the same speed, the differential drive device rotates in place about the longitudinal direction.

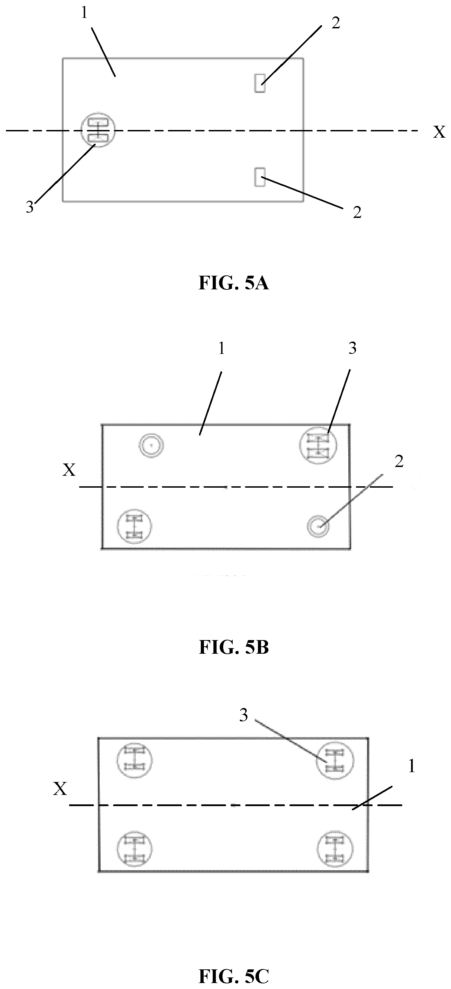

FIG. 5A to FIG. 5C show an automated guided vehicle, including: a vehicle body 1; and the differential drive device 3 as described above, which is supportably connected to the bottom surface of the vehicle body 1 to drive the vehicle body 1 to move linearly, move curvilinearly, or rotate in place.

Based on different quantities of differential drive devices and different rotational speeds and installation positions of the differential drive devices, an omnidirectional movement of the entire automated guided vehicle can be achieved.

For example, as shown in FIG. 5A, the automated guided vehicle includes: one differential drive device 3 mounted on a front side of a bottom surface of the vehicle body 1 along a central axis X of the bottom surface of the vehicle body 1; and a pair of driven wheels 2 mounted on a rear side of the bottom surface of the vehicle body 1 symmetrically about the central axis X.

Generally, this drive mode shown in FIG. 5A is a front-drive mode. The movement mode of the differential drive device corresponds to that of the entire automated guided vehicle. When the pair of output shafts 12 rotate in the same direction at the same speed, the differential drive device moves linearly, and the entire automated guided vehicle moves linearly; when the pair of output shafts 12 rotate in the same direction at the different speeds, the differential drive device moves curvilinearly, and the entire automated guided vehicle moves curvilinearly; when the pair of output shafts 12 rotate in the opposite directions at the same speed, the differential drive device rotates in place about the longitudinal direction, and the entire automated guided vehicle remains stationary.

As shown in FIG. 5B, the automated guided vehicle includes: a pair of differential drive devices 3 mounted on the bottom surface of the vehicle body 1 along one diagonal line of the bottom surface of the vehicle body 1; and a pair of driven wheels 2 mounted on the bottom surface of the vehicle body 1 along the other diagonal line of the bottom surface of the vehicle body 1.

Generally, the drive mode shown in FIG. 5B is a dual-drive mode. The pair of differential drive devices are respectively located on the front and rear sides of the bottom surface, and the movement mode of the differential drive devices is selected based on the positions of the differential drive devices on the bottom surface and the traveling direction of the AGV. Generally, the movement mode of one differential drive device located on the front side of the bottom surface in the traveling direction of the AGV corresponds to the movement mode of the entire automated guided vehicle, and one differential drive device located on the rear side of the bottom surface is selected to perform the same movement mode. When the pair of output shafts 12 of the differential drive device on the front side rotate in the same direction at the same speed, the differential drive device moves linearly, and the entire automated guided vehicle moves linearly. When the pair of output shafts 12 of the differential drive device on the front side rotate in the same direction at the different speeds, the differential drive device moves curvilinearly, and when the two differential drive devices are oriented in the same direction, the entire automated guided vehicle moves curvilinearly. When the pair of output shafts 12 of the differential drive device on the front side rotate in the same direction at the different speeds, the differential drive device moves curvilinearly, and when the two differential drive devices are oriented at an angle difference of 180°, the entire automated guided vehicle rotates in place about the center of the chassis.

As shown in FIG. 5C, the automated guided vehicle includes four differential drive devices 3 mounted at four corners of the bottom surface of the vehicle body 1.

Generally, this drive mode shown in FIG. 5C is a quad-drive mode. The movement mode of the differential drive device is selected based on the position of the differential drive device on the bottom surface and the traveling direction of the AGV. Generally, the movement mode of the pair of differential drive devices located on the front side of the bottom surface in the traveling direction of the AGV corresponds to the movement mode of the entire automated guided vehicle, and the pair of differential drive devices located on the rear side of the bottom surface are selected to perform the same movement mode. When the two pairs of output shafts 12 of the pair of differential drive devices on the front side rotate in the same direction at the same speed, the differential drive devices move linearly, and the entire automated guided vehicle moves linearly. When the two pairs of output shafts 12 of the pair of differential drive devices on the front side rotate in the same direction at the different speeds, the differential drive devices move curvilinearly, and when the orientation of each differential drive device is the same, the entire automated guided vehicle moves curvilinearly. When the two pairs of output shafts 12 of the pair of differential drive devices on the front side rotate in the same direction at the different speeds, the differential drive devices move curvilinearly, and when the differential drive devices arranged along the diagonal line are oriented at an angle difference of 180°, the entire automated guided vehicle rotates in place about the center of the chassis.

It can be seen from the foregoing technical solutions that, in the embodiments of the present application, the drive motor assembly 10 is formed into an integral shape and adopts a dual output shaft structure, where the pair of output shafts 12 are disposed in the same axial direction and extend from a pair of opposite side walls of the housing 11 respectively, to drive the pair of wheels 20 to rotate respectively. The pair of output shafts 12 rotate independently of each other, and are each corresponding to one drive motor, so that the pair of output shafts 12 can realize not only differential rotation, but also reverse rotation, thereby enabling the omnidirectional movement of the entire differential drive device.

Specifically, the pair of output shafts 12 may rotate in the same direction at the same speed, rotate in the same direction at different speeds, rotate in opposite directions at the same speed, or rotate in opposite directions at different speeds. Because the pair of output shafts 12 are respectively driven by the pair of drive motors, rotation directions and rotation speeds of the pair of output shafts 12 are independent of each other without mutual interference, thereby implementing a possibility of differential combination.

Further, in the embodiments of the present application, the pair of drive motors are integrated into the housing 11, rendering a simple and compact structure, which has a significant effect on reducing the overall turning radius of the automated guided vehicle and optimizing the layout of the chassis of the automated guided vehicle.

In the embodiments of the present application, the support assembly 30 is supportably connected to the bottom surface of the vehicle body of the automated guided vehicle, and is rotatably mounted on the top surface of the housing 11 about a horizontal direction, so that the support assembly 30 is rotatable relative to the bottom surface of the vehicle body of the automated guided vehicle about the horizontal direction, the bottom surface of the vehicle body of the automated guided vehicle is isolated from the support surface (usually the ground) of the wheel 20 by the support assembly 30, the bottom surface of the vehicle body of the automated guided vehicle may not be absolutely parallel to the support surface of the wheel 20, but the bottom surface of the vehicle body of the automated guided vehicle may form an acute angle with the support surface of the wheel 20 of one of the differential drive devices. The bottom surface of the vehicle body of the automated guided vehicle is always kept horizontal by the rotation of the support assembly 30 of one of the differential drive devices relative to the bottom surface of the vehicle body of the automated guided vehicle. This rotation adjustment is automatically realized based on the rigidity of the bottom surface of the vehicle body of the automated guided vehicle, which is simpler than the traditional seesaw structure, greatly saves space, enhances the adaptability of the entire differential drive device, and can balance the forces on the two wheels even on the bumpy road.

The series of detailed descriptions listed above are merely specific illustrations of feasible implementations of the present application, and are not intended to limit the protection scope of the present application. All equivalent implementations or changes made without departing from the technical spirit of this application, such as combination, division, or repetition of features, should be included in the protection scope of this application.

## Claims

1. A differential drive device for an automated guided vehicle, comprising:
a drive motor assembly (10), wherein the drive motor assembly (10) comprises a housing (11), a pair of output shafts (12), and a pair of drive motors; the pair of output shafts (12) extend from a pair of opposite side walls of the housing (11) respectively, and the pair of output shafts (12) are both arranged along a first axis (L); the pair of drive motors are in one-to-one correspondence with the pair of output shafts (12), and are configured to drive the pair of output shafts (12) to rotate independently of each other, enabling the pair of output shafts (12) to rotate at a same speed or different speeds, and/or in a same direction or opposite directions;
a pair of wheels (20), coaxially connected to the pair of output shafts (12) respectively, the pair of output shafts (12) respectively driving the pair of wheels (20) to rotate; and
a support assembly (30), supportably connected to a bottom surface of a vehicle body of the automated guided vehicle, and rotatably mounted on a top surface of the housing (11) around a horizontal direction (H) perpendicular to the first axis (L), wherein the support assembly (30) isolates the bottom surface of the vehicle body of the automated guided vehicle from a support surface for supporting the wheels (20), enabling the bottom surface of the vehicle body of the automated guided vehicle to remain horizontal when the wheels (20) contact the support surface.

2. The differential drive device for the automated guided vehicle according to claim 1, wherein for each output shaft (12) of the pair of output shafts (12), the output shaft (12) is connected to a corresponding wheel (20) of the wheels (20) via a speed reducer (13), and a gear directly engaged with the speed reducer (13) is provided on an end of the output shaft (12); and
the housing (11) comprises a pair of flanges (14), the pair of flanges (14) are respectively mounted on the pair of opposite side walls of the housing (11), each of the flanges (14) comprises a step surface (141) protruding outward, the output shaft (12) extends from a center of a corresponding step surface (141), and an inner side surface of the speed reducer (13) is flush with the corresponding step surface (141).

3. The differential drive device for the automated guided vehicle according to claim 2, wherein each of the wheels (20) is disposed around a circumferential surface of a corresponding speed reducer (13), and an inner side surface of each of the wheels (20) is flush with the corresponding step surface (141).

4. The differential drive device for the automated guided vehicle according to any one of claims 1 to 3, wherein a minimum turning radius of the differential drive device is a distance between the pair of wheels (20) in a direction of the first axis (L).

5. The differential drive device for the automated guided vehicle according to any one of claims 1 to 4, wherein the support assembly (30) comprises:
an outer ring (31) and an inner ring (32), wherein the outer ring (31) and the inner ring (32) are concentrically arranged in a same plane, and an outer edge of the inner ring (32) is in rolling fit with an inner edge of the outer ring (31), enabling the inner ring (32) to rotate relative to the outer ring (31) around a second axis (Y) extending in a longitudinal direction; and
a pair of connecting brackets (33), disposed on a bottom surface of the inner ring (32) and symmetrically arranged with respect to a center of the inner ring (32),
wherein the outer ring (31) is supportably connected to the bottom surface of the vehicle body of the automated guided vehicle, and the connecting brackets (33) are mounted on the top surface of the housing (11).

6. The differential drive device for the automated guided vehicle according to claim 5, wherein a pair of support brackets (111) are provided on the top surface of the housing (11), the pair of support brackets (111) are symmetrically arranged about the first axis (L), and the pair of connecting brackets (33) are respectively hinged with the pair of support brackets (111) through a pair of hinge shafts (112).

7. The differential drive device for the automated guided vehicle according to any one of claims 1 to 6, wherein
the pair of output shafts (12) rotate in a same direction at a same speed, enabling the differential drive device to move linearly;
the pair of output shafts (12) rotate at different speeds, enabling the differential drive device to move curvilinearly; or
the pair of output shafts (12) rotate in opposite directions at a same speed, enabling the differential drive device to rotate in place.

8. An automated guided vehicle, comprising:
a vehicle body (1); and
the differential drive device according to any one of claims 1 to 7, supportably connected to a bottom surface of the vehicle body (1) to drive the vehicle body (1) to move linearly, move curvilinearly, or rotate in place.

9. The automated guided vehicle according to claim 8, wherein there is one differential drive device, and the one differential drive device is mounted on a front side of the bottom surface of the vehicle body (1) along a central axis (X) of the bottom surface of the vehicle body (1), and
the automated guided vehicle further comprises a pair of driven wheels (2), and the pair of driven wheels (2) are symmetrically mounted on a rear side of the bottom surface of the vehicle body (1) about the central axis (X).

10. The automated guided vehicle according to claim 8, wherein
there is a pair of differential drive devices, and the pair of differential drive devices are mounted on the bottom surface of the vehicle body (1) along a diagonal line of the bottom surface of the vehicle body (1), and
the automated guided vehicle further comprises a pair of driven wheels (2), and the pair of driven wheels (2) are mounted on the bottom surface of the vehicle body (1) along the other diagonal line of the bottom surface of the vehicle body (1).

11. The automated guided vehicle according to claim 8, wherein there are four differential drive devices, and the four differential drive devices are mounted at four corners of the bottom surface of the vehicle body (1).
